# FASCICULE DE BREVET EUROPEEN

(11) **EP 0 501 861 B1**
(45) Date de publication et mention de la délivrance du brevet: **15.06.1994**
(21) Numéro de dépôt: 92400464.1
(22) Date de dépôt: 24.02.1992
(51) Int. Cl.: F16L 59/14

(54) **Procédé de réalisation d'une protection thermique à empilages parallèles renforcés radialement, notamment pour la protection de structures ou conduits de gaz de propulsion dans le domaine aéronautique et spatial**
Verfahren zur Herstellung einer Wärmedämmung aus radial verstärkten parallelen Schichten, insbesondere für den Schutz von gasführenden Strukturen oder Leitung für den Antrieb in der Luft- und Raumfahrttechnik
Process of manufacturing a thermal insulator consisting of radially reinforced parallel layers, especially for the protection of gas conveying structures or pipes for propulsion in the field of aircraft and spacecraft

(30) Priorité: 26.02.1991 FR 9102256
(43) Date de publication de la demande: 02.09.1992
(73) Titulaire: AEROSPATIALE Société Nationale Industrielle, 75781 Paris Cédex 16 (FR)
(72) Inventeur: Ferrier, Christiane, F-91430 Igny (FR); Lecourt, Guy, F-91430 Vauhallan (FR); Claudel, Jean, F-94000 Villejuif (FR); Portalier, Claude, F-78160 Marly (FR); Dubernet, Robert, F-91470 Limours (FR); Viala, Jean, F-94220 Charenton Le Pont (FR)
(74) Mandataire: Lhuillier, René

(56) Documents cités:
- DE-U- 8 802 738
- PATENT ABSTRACTS OF JAPAN vol. 2, no. 59, 27 Avril 1978 & JP-A-53 018 415 (SHIN NIPPON SEITETSU) 20 Février 1978

## Description

L'invention se situe dans le domaine des industries aéronautiques et spatiales et a pour objet un procédé de réalisation d'une structure thermoréfractaire dite "tridimensionnelle" obtenue par des empilages parallèles renforcés radialement notamment pour réaliser des protections thermiques internes ou externes de structures ou de conduits de gaz chauds de propulsion telles que des protections externes de corps de rentrée atmosphérique, des protections internes de chambres de combustion, des tuyères d'éjection, des freins d'avions rapides etc...

Ces structures sont généralement réalisées par tissage ou par des procédés s'apparentant au tissage, à partir de fils réfractaires dont les plus courants sont en silice ou en carbone, ou quelque fois en verre, graphite ou autre. Les structures sont ensuite imprégnées de résines choisies parmi les plus résistantes à la température, telles que des résines phénoliques, métallophénoliques, polyimides, etc..., puis elles sont polymérisées à chaud.

Une architecture bien connue consiste à disposer tridimensionnellement les fils selon trois directions orthogonales de l'espace. Ainsi pour fabriquer une structure de révolution, on connaît un procédé qui consiste à réaliser un mandrin-support équipé de picots plantés tout autour du mandrin, qui définissent entre leurs rangées, des couloirs circonférentiels et des couloirs longitudinaux, et à disposer dans ces couloirs, par bobinage et par tramage, des nappes circonférentielles et longitudinales de fils superposés. Puis on imprègne de résine et on polymérise l'ensemble obtenu afin de pouvoir éliminer le mandrin-support. Les picots réalisés aussi en matériaux fibreux rigidifiés sont donc perpendiculaires aux nappes de fibres. Mais leur implantation sur le mandrin n'est pas sans poser de problèmes.

Il existe aussi des structures où les trois dimensions ne sont pas orthogonales et d'autres à 4, 5 ou 6 directions principales.

Quoiqu'il en soit ces structures tridimensionnelles connues sont plus isotropes que les matériaux uni ou bidirectionnels et par voie de conséquence, elles sont très résistantes dans toutes les directions. En outre elles sont très endurantes du fait de leur résistance au délaminage, aux écoulements ablatifs à haute température et aux chocs thermiques, et conviennent donc pour réaliser des structures internes ou externes de propulseur puisqu'elles résistent aussi aux sollicitations mécaniques de vibrations lors du fonctionnement du propulseur.

En revanche ces structures doivent être réalisées par des machines à tisser spéciales et complexes, avec pour conséquence des prix de production très élevés. Ainsi des machines connues assurant le bobinage et le tramage des fils dans les couloirs entre les picots comprennent généralement un chariot de tramage qui se déplace en permanence parallèlement à l'axe du mandrin dont une passette de tramage orientée perpendiculairement au chariot déroule le fil entre les picots. Cela n'exclut pas l'usage d'une autre machine pour usiner le mandrin support et encore une autre pour implanter les picots sur le mandrin.

De toute façon la matrice est amenée par injection de résine non chargée liquide, dans les mailles de la structure et il est souvent bénéfique, sinon indispensable, à y introduire des charges pulvérulentes réfractaires telles que zircone, alumine, magnésie, carbure de silicium etc... qui en améliorent les qualités réfractaires. Mais cette introduction est difficile et nécessite la mise en oeuvre de moyens lourds et délicats.

C'est pourquoi l'invention propose un type de structures tridimensionnelles qui permet d'éviter ces inconvénients par le fait qu'elles s'obtiennent à partir de tissus bidimensionnels préimprégnés dans lesquels ont été introduites des fibres suivant la troisième direction, pour former la structure tridimensionnelle dans laquelle sont intégrées des charges pulvérulentes réfractaires, cette structure étant d'une élaboration relativement aisée et permettant d'obtenir des taux de remplissage élevés en matériaux réfractaires.

L'objet principal de l'invention consiste donc en un procédé de réalisation d'une protection thermique à empilages parallèles renforcés radialement, notamment pour la protection de structures ou conduits de gaz de propulsion dans le domaine aéronautique et spatial consistant
- à imprégner des tissus de fils réfractaires par de la résine éventuellement additionnée de charges poudreuses réfractaires,
- à empiler des couches de tissus ainsi imprégnées jusqu'à l'obtention de l'épaisseur finale recherchée,
- à percer au moins partiellement les couches empilées pour former des trous perpendiculairement aux tissus,
- à introduire dans lesdits trous des fibres de matériau réfractaire, imprégnées ou non,
- puis à polymériser la structure tridimensionnelle obtenue sous pression et avec apport d'énergie, par exemple sous forme de chaleur ou de rayonnement.

Les couches empilées peuvent être obtenues par bobinage d'une bande continue de tissu à plusieurs couches superposées. Dans les trous sont introduites automatiquement ou encontinu les mèches de fibres imprégnées ou non de la même famille de résine que les tissus, qui se présentent sous forme de baguettes unitaires, de fils doublés ou d'un fil continu torsadé ou non ou encore guipé ou non.

D'autres caractéristiques et avantages de l'invention apparaîtront à la lecture de la description, et aux exemples qui vont suivre dans lesquels on fait référence aux dessins annexés qui représentent :

Figure 1 des vues en coupe d'un empilage bidirectionnel avec des variantes de structure tridimensionnelle.

Figure 2 une virole cylindrique de bobinage.

Figure 3 une vue en coupe partielle à plus grande échelle d'une virole cylindrique bobinée.

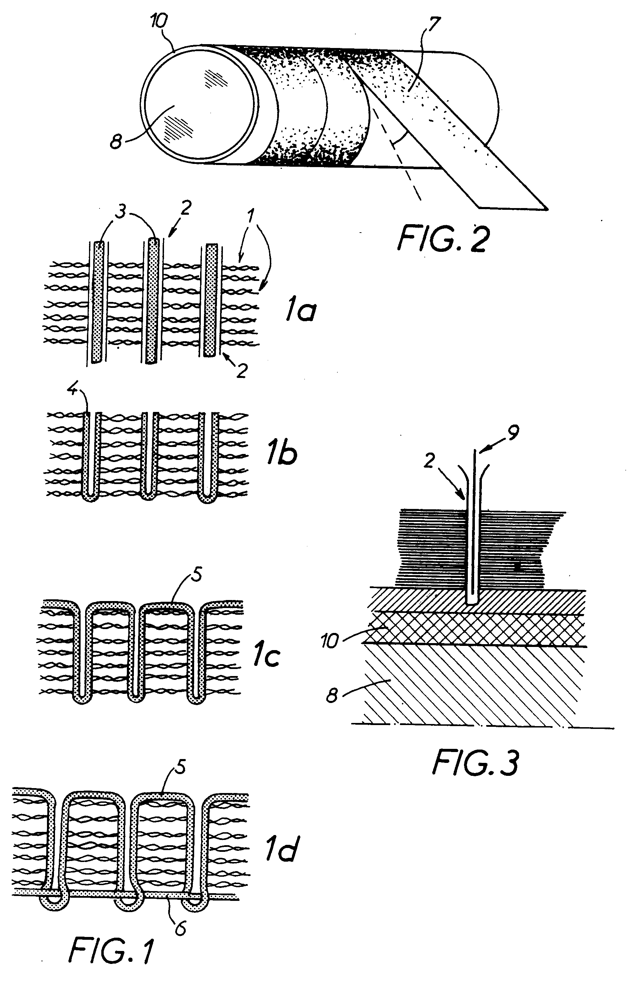

La figure 1 illustre schématiquement l'élaboration d'une structure tridimensionnelle. On part de tissus bidirectionnels 1 par exemple réalisés en toile, gaze, satin, serge, taffetas, tricots, etc... à partir de fils réfractaires de silice, carbone, graphite ou carbure de silicium. On imprègne préalablement ces tissus par de la résine du genre résine phénolique, furanique, polyimide etc..., éventuellement additionnée de charges poudreuses réfractaires adéquates. L'imprégnation peut se faire par voie liquide, à froid ou à chaud, en solution ou à l'état fondu, au trempé ou au racle suivant le type de résine utilisée, de façon connue en soi.

Ces tissus 1 (figure 1a) imprégnés, sont ensuite empilés à plat en autant de couches que nécessaire pour obtenir des plaques planes ou des pièces peu galbées ouvertes, ou encore, comme on le verra plus loin, par enroulement sur un mandrin pour former des pièces cylindriques ou cylindrico-coniques. La phase suivante consiste à percer de part en part l'empilage de tissus 1 pour former des trous 2 perpendiculaires aux tissus, suivant une densité, une disposition, et un diamètre choisis.

Dans ces trous 2 sont introduits (figure 1a) des mèches 3 de fibres avantageusement préimprégnées de la même résine que les tissus, mèches qui ont des proportions de fibres et des dimensions évidemment choisies en fonction des trous dans lesquels elles sont introduites. Les mèches se présentent sous forme de baguettes unitaires 3 ou encore de fils doublés 4 comme le montre la figure 1b. Dans la variante de la figure 1c les fils doublés se rejoignent pour former un fil continu 5 autorisant son introduction mécanisée dans l'empilage. Dans le cas de la figure 1d un fil supplémentaire 6 s'engage dans les boucles du fil continu 5 et s'obtient grâce à une mécanisation du genre machine à coudre.

La structure tridimensionnelle ainsi obtenue selon l'une ou l'autre des représentations de la figure 1 est ensuite moulée à chaud et sous pression, soit à la presse, soit en autoclave avec compression soit axiale, soit radiale, et suivant le cycle température-pression-temps adapté à la résine d'imprégnation.

A partir de ce procédé, on peut élaborer des pièces planes mais aussi des pièces de révolution ou encore des pièces d'autre géométrie permises par le moulage.

La figure 2 illustre un exemple de réalisation d'une virole cylindrique protégeant la chambre d'un moteur statoréacteur.

En premier lieu on a imprégné un tissu de fils de silice avec une résine phénolique chargée à 50 % de zircone, puis on a conditionné le tissu en une bande continue 7 dont la dimension est par exemple de 330 mm de largeur et 0,5 mm d'épaisseur. Ensuite on procède à l'opération de spiralage de la bande 7 autour d'un mandrin 8 à l'aide d'une machine appropriée et avec une ventilation à air chaud pour ramollir la résine. A titre d'exemple le bobinage est assuré sur un mandrin recouvert d'une tôle 10, d'un diamètre extérieur de 330 mm. Le bobinage est fait à spires jointives selon un angle α d'environ 45°. On dépose 42 couches d'épaisseur finale d'environ 18 mm. On notera au un frettage à spires jointives avec un fil en "Kevlar" est assuré toutes les deux couches, puis retiré.

C'est ensuite qu'est effectuée à l'aide d'une machine à picoter l'opération de perçage de trous 2 de 2,3 mm dans le bobinage de tissu, selon un pas et une répartition choisis suivi de l'introduction dans chaque trou d'un fil de silice torsadé d'un diamètre de 0,8 mm, non préimprégné, les fils de silice 9 représentant la troisième dimension de la structure tridimensionnelle, comme le montre la figure 3. La dernière étape de polymérisation de la résine est réalisée en autoclave sous pression de 10 à 40 bar à 170°C. Le cylindre est ensuite séparé de son mandrin et mis aux cotes voulues par usinage.

A l'aide de ce procédé, on peut aussi réaliser des plaques de protection thermique silicone. Sur le mandrin d'une machine à picoter est disposée - à la place de la tôle de l'exemple précédent - une couche de feutre sur lequel reposeront plusieurs couches superposées de feuilles de tricot du type fibérite d'une épaisseur de 3 à 5 mm par exemple.

Ensuite les picots sont insérés directement dans la nappe sans perçage préalable de trous comme dans l'exemple précédent. Puis la couche picotée est découpée suivant la génératrice du mandrin de bobinage et disposée sous forme de plaque dans un moule approprié.

Le moulage sous une pression de 10 à 50 bars à 150° pendant 10 minutes conduit à l'obtention d'une structure tridimensionnelle à tenue renforcée à l'ablation. Dans le cas où les implants ou picots ne pénètreraient pas dans toute l'épaisseur, on obtiendrait un tapis de fibres réfractaires non imprégnées implantées dans un support résistant à l'ablation.

## Revendications

1. Procédé de réalisation d'une protection thermique à empilages parallèles renforcés radialement, notamment pour la protection de structures ou conduits de gaz de propulsion dans le domaine aéronautique et spatial consistant
- à imprégner des tissus (1) de fils réfractaires par de la résine éventuellement additionnée de charges poudreuses réfractaires,
- à empiler des couches de tissus ainsi imprégnées jusqu'à l'obtention de l'épaisseur finale recherchée,
- à percer au moins partiellement les couches empilées pour former des trous perpendiculairement aux tissus,
- à introduire dans lesdits trous des fibres de matériau réfractaire,
- puis à polymériser la structure tridimensionnelle obtenue sous pression, et avec apport d'énergie, par exemple sous forme de chaleur ou de rayonnement.

2. Procédé selon la revendication 1, caractérisé en ce que l'empilage des couches de tissus est obtenu par bobinage d'une bande continue (7) de tissu à plusieurs couches superposées.

3. Procédé selon les revendications 1 et 2, caractérisé en ce qu'on introduit dans les trous des mèches de fibres imprégnées de la même famille de résine que les tissus.

4. Procédé selon la revendication 3, caractérisé en ce que les mèches se présentent sous forme de baguettes unitaires (3).

5. Procédé selon la revendication 4, caractérisé en ce que les mèches se présentent sous forme de fils doublés (4).

6. Procédé selon la revendication 5, caractérisé en ce que les mèches se présentent sous forme d'un fil continu (5) pouvant être associé à un fil supplémentaire (6).

7. Procédé selon les revendications 1 et 2, caractérisé en ce qu'on introduit dans les trous un fil de silice.

8. Structure tridimensionnelle obtenue par le procédé selon les revendications 1 à 7, caractérisée en ce qu'elle est obtenue à partir d'empilages de tissus bidirectionnels renforcés radialement par des mèches de fibres réfractaires introduites dans des trous perpendiculaires auxdits empilages.

## Patentansprüche

1. Verfahren zur Herstellung einer Wärmedämmung aus radial verstärkten parallelen Schichten, insbesondere zum Schutz von Strukturen oder Leitungen für Antriebsgase in der Luft- und Raumfahrttechnik mit folgenden Schritten:
- Imprägnieren von Geweben (1) aus hitzebeständigen Fasern durch ein Harz, dem eventuell hitzebeständige, pulverige Füllstoffe beigefügt sind,
- Aufeinanderlegen von Schichten aus den so imprägnierten Geweben, bis die erstrebte endgültige Dicke erreicht ist,
- wenigstens teilweises Durchbohren der aufeinandergelegten Schichten, um senkrecht zu den Geweben Löcher zu bilden,
- Einbringen von Fasern aus hitzebeständigem Material in die Löcher,
- dann Polymerisieren der erhaltenen dreidimensionalen Struktur unter Druckeinwirkung und Energiezufuhr zum Beispiel in Form von Wärme oder Strahlung.

2. Verfahren nach Anspruch 1, dadurch gekennzeichnet, daß der Stapel aus Gewebeschichten durch Wickeln eines fortlaufenden Gewebestreifens (7) in mehreren übereinandergelegten Schichten erzielt wird.

3. Verfahren nach den Ansprüchen 1 und 2, dadurch gekennzeichnet, daß Faserdochte, die mit der gleichen Gruppe von Harzen wie die Gewebe imprägniert sind, in die Löcher eingebracht werden.

4. Verfahren nach Anspruch 3, dadurch gekennzeichnet, daß die Dochte die Form von einheitlichen Stäbchen (3) aufweisen.

5. Verfahren nach Anspruch 4, dadurch gekennzeichnet, daß die Dochte die Form von Doppelfasern (4) aufweisen.

6. Verfahren nach Anspruch 5, dadurch gekennzeichnet, daß die Dochte die Form einer fortlaufenden Faser (5) aufweisen, die mit einer Hilfsfaser (6) verbunden sein kann.

7. Verfahren nach den Ansprüchen 1 und 2, dadurch gekennzeichnet, daß eine Silicafaser in die Löcher eingebracht wird.

8. Dreidimensionale Struktur, die durch das Verfahren nach den Ansprüchen 1 bis 7 gewonnen wird, dadurch gekennzeichnet, daß sie auf der Grundlage von bidirektionalen Gewebeschichten erhalten wird, die radial durch Dochte aus hitzebeständigen Fasern verstärkt sind, welche in die zu den Schichten senkrecht verlaufenden Löcher eingebracht werden.

## Claims

1. Method for producing thermal protection with radially reinforced parallel layers, especially for the protection of propulsion gas pipes or structures in aeronautical and space applications, consisting in:
- impregnating fabrics (1) of refractory yarns with resin, optionally with the addition of powdery refractory fillers,
- stacking layers of fabrics thus impregnated until the desired final thickness is obtained,
- piercing the stacked layers, at least partially, so as to form holes perpendicularly to the fabrics,
- introducing fibres made of refractory material into the said holes,
- then polymerising the three-dimensional structure obtained, under pressure and with energy being applied, for example in the form of heat or radiation.

2. Method according to Claim 1, characterised in that the stacking of the layers of fabrics is obtained by winding a continuous strip (7) of fabric with several superposed layers.

3. Method according to Claims 1 and 2, characterised in that staple slivers, impregnated with the same kind of resin as the fabrics, are introduced into the holes.

4. Method according to Claim 3, characterised in that the slivers are in the form of unitary rods (3).

5. Method according to Claim 4, characterised in that the slivers are in the form of threads folded double (4).

6. Method according to Claim 5, characterised in that the slivers are in the form of a continuous thread (5) able to be associated with an additional thread (6).

7. Method according to Claims 1 and 2, characterised in that a silica thread is introduced into the holes.

8. Three-dimensional structure obtained by the method according to Claims 1 to 7, characterised in that it is obtained from layers of bidirectional fabrics radially reinforced by refractory staple slivers introduced into holes perpendicular to the said layers.
